# EUROPEAN PATENT SPECIFICATION

(11) **EP 3 900 970 B1**
(45) Date of publication and mention of the grant of the patent: **09.08.2023**
(21) Application number: 21167618.4
(22) Date of filing: 09.04.2021
(51) Int. Cl.: B60K 11/06, A01D 34/63, B60K 11/08, A01D 43/063

(54) **WORK VEHICLE**
NUTZFAHRZEUG
ENGIN DE TRAVAIL

(30) Priority: 21.04.2020 JP 2020075740
(43) Date of publication of application: 27.10.2021
(73) Proprietor: Iseki & Co., Ltd., Matsuyama-shi, Ehime 799-2692 (JP)
(72) Inventor: TODA, Hirotaka, Iyo-gun,, Ehime 791-2193 (JP); TSUNASHIMA, Taro, Iyo-gun,, Ehime 791-2193 (JP); FUJII, Katsutomo, Iyo-gun,, Ehime 791-2193 (JP)
(74) Representative: TBK

(56) References cited:
- EP-A1- 2 850 931
- JP-U- S51 158 513
- US-A- 4 606 422
- US-A1- 2013 303 070

## Description

### BACKGROUND OF THE INVENTION

### FIELD OF THE INVENTION

The present invention relates to a work vehicle.

### DESCRIPTION OF THE RELATED ART

Known in the related art is, for example, a lawnmower in which an engine is mounted in a vehicle rear portion and a hood is disposed above the engine. See, for example, JP 2009 202684 A and EP 2 850 931 A1, with the latter disclosing a riding mower as a work vehicle having the features specified in the preamble of claim 1.

However, in the lawnmower of the related art, cut turf grass may intrude from an intake port in a case where, for example, the intake port is provided in the hood so that the cooling efficiency of the engine is enhanced.

JP S51 158513 U discloses, as background art, an engine compartment of a passenger car. The engine compartment comprises a rear lid provided above the engine and having an intake port. A hood is provided on the rear lid to cover the intake port from above. A side surface of the hood is provided with an opening forming a gap with the rear lid. A bent member is provided along an outer circumference of the intake port with the side surface of the hood being so disposed as to face a side surface of the bent member with the gap formed.

### SUMMARY OF THE INVENTION

The invention has been made in view of the above, and an object of the invention is to provide a work vehicle capable of enhancing engine cooling efficiency while suppressing turf grass intrusion.

In order to solve the above problems and achieve the object, a work vehicle includes the features specified in claim 1.

According to one aspect of the embodiment, it is possible to enhance the cooling efficiency of the engine while suppressing turf grass intrusion.

### BRIEF DESCRIPTION OF THE DRAWINGS

Fig. 1 is a side view of a riding lawnmower according to an embodiment;
Fig. 2 is a perspective view of the riding lawnmower according to the embodiment;
Fig. 3 is an enlarged view of the periphery of an ECU;
Fig. 4 is a perspective view illustrating an overall configuration of the ECU;
Fig. 5 is an enlarged view of the riding lawnmower;
Fig. 6 is an enlarged view of the riding lawnmower;
Fig. 7 is a diagram illustrating the positional relationship between a cover and a bent member;
Fig. 8 is a diagram illustrating the disposition relationship between the cover and the bent member; and
Fig. 9 is a diagram illustrating the disposition of an electric fan.

### DETAILED DESCRIPTION OF THE INVENTION

Hereinafter, an embodiment of the work vehicle that is disclosed in the present application will be described in detail with reference to the accompanying drawings. It should be noted that this invention is not limited to the embodiment illustrated below.

### <Overall Configuration of Riding Lawnmower 1>

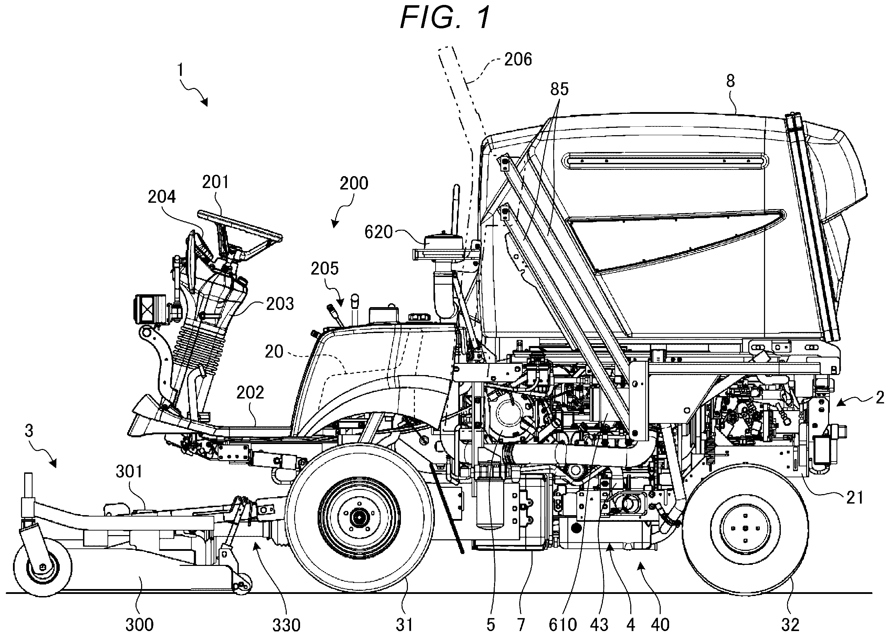

First, an overall configuration of a riding lawnmower 1 as a work vehicle will be briefly described with reference to Fig. 1. Fig. 1 is a side view of the riding lawnmower 1 according to the embodiment.

The riding lawnmower 1 is operated by an operator (also referred to as a worker) seated in a driver's seat 20 provided in the front portion of a traveling vehicle body 2 provided with a vehicle body frame 21. It should be noted that the front-rear direction is the traveling direction of the riding lawnmower 1 during its straight travel, the front side in the traveling direction is "front", and the rear side in the traveling direction is "rear" in the following description. The traveling direction of the riding lawnmower 1 is the direction that is from the driver's seat 20 to a steering wheel 201 during the straight travel of the riding lawnmower 1.

In addition, the right-left direction is horizontally orthogonal to the front-rear direction. In the following description, the right and left are defined toward the "front" side. In other words, the left hand side is "left" and the right hand side is "right" in a state where the operator is seated in the driver's seat 20 and faces forward. In addition, the up-down direction is a vertical direction. The front-rear direction, the right-left direction, and the up-down direction are mutually orthogonal in three dimensions. Each direction is defined for convenience so that the description is easy to understand, and the directions do not limit the invention. It should be noted that the riding lawnmower 1 may be referred to as a machine body in the following description.

As illustrated in Fig. 1, the riding lawnmower 1 includes a pair of right and left front wheels 31 in the front portion of the traveling vehicle body 2 and a pair of right and left rear wheels 32 in the rear portion of the traveling vehicle body 2 as a pair of right and left traveling wheels.

In addition, the riding lawnmower 1 includes a mower device 3 having a cutting blade rotating around a vertical axis (axis along the up-down direction in Fig. 1) and a motor driving the cutting blade in front of the lower portion of the traveling vehicle body 2. The mower device 3 is attached to the front of the traveling vehicle body 2 so as to be capable of moving up and down via a mower lifting and lowering device 330.

In addition, the mower device 3 transmits the power of an engine 4 to the cutting blade via a mower PTO shaft (not illustrated), a mower input shaft 301, and a mower transmission device (not illustrated) in a mower deck 300.

In addition, the riding lawnmower 1 includes an operation unit 200 in the front portion of the traveling vehicle body 2. The operation unit 200 includes the driver's seat 20, a floor step 202, a steering column 203, and the steering wheel 201. The floor step 202 is provided in front of the driver's seat 20. The steering column 203 is erected in the front portion of the floor step 202. The steering wheel 201 is provided on the steering column 203. An operation panel 204, various operation levers 205, various operation switches, and so on are provided in addition to the steering wheel 201 around the steering column 203. Further, a safety bar 206 is provided in the rear portion of the operation unit 200 so as to be tiltable back and forth.

In addition, a collector 8 is provided at the rear part of the driver's seat 20 on the traveling vehicle body 2. The collector 8 is a grass collecting container accommodating, for example, turf grass cut by the mower device 3 (hereinafter, referred to as mown grass in some cases). The collector 8 is mounted so as to be capable of moving up and down via a lifting and lowering arm 85.

In addition, an engine unit 40 is provided below the collector 8. The engine unit 40 includes the engine 4, an exhaust gas purification device 5, an air cleaner 610, and a transmission case 7.

Although the engine 4 is, for example, a diesel engine equipped with a supercharger (turbocharger), the engine 4 may be a supercharger-less engine.

The exhaust gas purification device 5 is provided in the middle of an exhaust pipe 43 guiding the exhaust gas from the engine 4 to the outside of the machine body. A filter called a diesel particulate filter (DPF) is stored in the exhaust gas purification device 5, and the exhaust gas purification device 5 collects particles by passing the exhaust gas through the DPF. In addition, the DPF may be clogged by the collected particles accumulating, and thus a regeneration function is provided for the accumulated particles to combust and burn up.

The air cleaner 610 supplies clean air to the engine 4. The air cleaner 610 is connected to a pre-cleaner 620 disposed above and to the left of the driver's seat 20. The pre-cleaner 620 is fixed to the machine body frame.

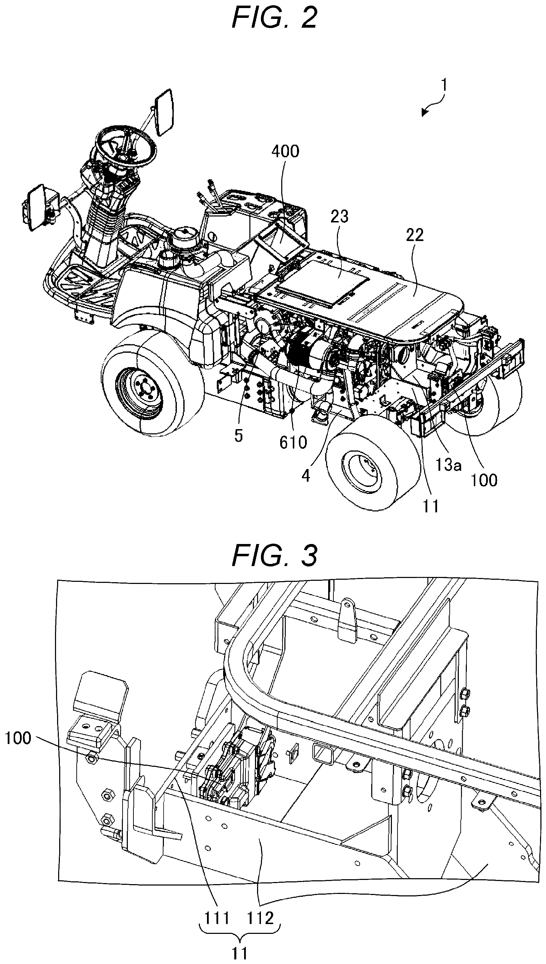

The transmission case 7 is disposed in the lower portion of the engine 4 on the driver's seat 20 side. The power from the engine 4 is transmitted to the transmission case 7. Specifically, the power from the engine 4 shifts the hydraulic motor (not illustrated) that is connected to the rear wheel 32 and shifts and drives the rear wheel 32 by a trunnion shaft tilting via a PTO shaft (not illustrated) and via a hydraulic pump 13a (see Fig. 2) of the hydraulic continuously variable transmission (not illustrated) that is included in the transmission case 7.

Next, the configuration of the riding lawnmower 1 will be further described with reference to Fig. 2. Fig. 2 is a perspective view of the riding lawnmower 1 according to the embodiment. It should be noted that a partial configuration such as the collector 8 constituting the riding lawnmower 1 is not illustrated in Fig. 2.

As illustrated in Fig. 2, the riding lawnmower 1 further includes a hood 22 and an engine control unit (ECU) 100. The hood 22 is a member that is disposed between the engine 4 and the collector 8 and covers the engine 4.

In addition, as illustrated in Fig. 2, a transport port 400 transporting the turf grass (hereinafter, mown grass) cut by the mower device 3 to the collector 8 is provided above the hood 22. Specifically, the transport port 400 is a connection portion in relation to the collector 8. More specifically, when the collector 8 is at its lowered normal position, the mown grass cut by the mower device 3 is sent into the collector 8 by a blower (not illustrated) by the transport port 400 overlapping the inlet (not illustrated) of the collector 8.

In the riding lawnmower 1 according to the embodiment, a cover 23 is disposed in order to prevent the mown grass that has failed to enter the collector 8 from the transport port 400 from intruding into the intake port of the hood 22. Details of the cover 23 will be described later.

The ECU 100 is a control device controlling the engine 4. The ECU 100 is disposed in the rear part of the traveling vehicle body 2. Specifically, the ECU 100 is disposed in the rear part of the engine 4 and the hydraulic pump 13a. In other words, in terms of disposition relationship, the hydraulic pump 13a is positioned between the ECU 100 and the engine 4.

As a result, the hot air around the engine 4 is blocked by the hydraulic pump 13a, and thus it is possible to prevent the hot air from flowing around the ECU 100. In other words, even in the event of a rise in the ambient temperature of the engine 4, a rise in the ambient temperature of the ECU 100 can be suppressed. Accordingly, it is possible to suppress a failure of the ECU 100 attributable to a rise in ambient temperature.

In addition, as illustrated in Fig. 1, components likely to increase in temperature, such as the exhaust gas purification device 5, are collected around the engine 4, and thus the distance between the components likely to increase in temperature and the ECU 100 can be secured to a certain extent or more and a rise in the ambient temperature of the ECU 100 can be suppressed.

Here, the disposition of the ECU 100 will be further described with reference to Fig. 3. Fig. 3 is an enlarged view of the periphery of the ECU 100. Fig. 3 is a view of the ECU 100 from the upper right of the riding lawnmower 1.

As illustrated in Fig. 3, the ECU 100 is fixed to a bracket 11. The bracket 11 has a rear part 111 disposed in the rear part of the traveling vehicle body 2 and lateral parts 112 extending from the right and left ends of the rear part 111 toward the front of the traveling vehicle body 2.

The lateral parts 112 support the engine 4 and the right and left rear wheels 32 (axles of the rear wheels 32). The rear part 111 is a member that connects the right and left lateral parts 112, and the rigidity of the bracket 11 is improved as a result of the connection.

The ECU 100 is disposed on the front-side main surface of the plate-shaped rear part 111 with its side surrounded by the lateral part 112. As a result, the hot air of the engine 4 is blocked by the bracket 11, and thus a rise in the ambient temperature of the ECU 100 can be suppressed.

In addition, since the ECU 100 is fixed to the bracket 11, the traveling vibration of the rear wheel 32, the driving vibration of the engine 4, and the like can be dispersed over the entire bracket 11, and thus the vibration that is received by the ECU 100 can be suppressed.

In addition, the bracket 11 is absent and is open in the up-down direction of the ECU 100. In other words, the bracket 11 is open in the up-down direction of the ECU 100. As a result, the unheated traveling wind of the riding lawnmower 1 can be taken into the periphery of the ECU 100, warm air can be released upward, and thus a rise in the ambient temperature of the ECU 100 can be suppressed.

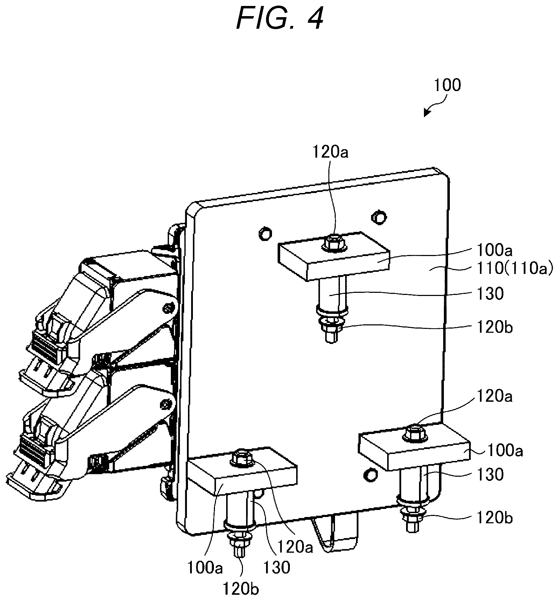

In addition, as illustrated in Fig. 3, the ECU 100 has a plate shape and is disposed substantially parallel to the rear part 111. Specifically, a main surface 110a (see Fig. 4) of a support member 110 (described later) of the ECU 100 extends in the up-down direction with respect to the traveling vehicle body 2 and the main surface 110a is disposed so as to face the traveling vehicle body 2 in the front-rear direction. In other words, the ECU 100 is disposed upright in the up-down direction. As a result, the periphery of the ECU 100 can be configured with compactness and the dust that accumulates on the ECU 100 can be reduced. It should be noted that the ECU 100 may be disposed such that the main surface 110a of the support member 110 faces the traveling vehicle body 2 in the right-left direction.

Next, a method for fixing the ECU 100 will be described with reference to Fig. 4. Fig. 4 is a perspective view illustrating an overall configuration of the ECU 100. Fig. 4 is a view of the ECU 100 from the rear left.

As illustrated in Fig. 4, the ECU 100 has the support member 110 supporting the control circuit of the ECU 100. As illustrated in Fig. 4, the support member 110 is a plate-shaped member and a plurality of protruding portions 100a are provided on the main surface 110a on the rear side. It should be noted that the control circuit is fixed to the main surface positioned on the back surface side of the main surface 110a. It should be noted that the number of the protruding portions 100a may be four or more or two or less although a case where the number is three is illustrated in Fig. 4.

Each of the plurality of protruding portions 100a is provided with fasteners such as a bolt 120a and a nut 120b extending in the up-down direction. Further, the rear part 111 is also provided with a fixing portion, which is a protruding portion (not illustrated), at a position corresponding to the plurality of protruding portions 100a. The bolt 120a is inserted into the hole portion (not illustrated) provided in the fixing portion and is fastened by the nut 120b.

Further, as illustrated in Fig. 4, a cushioning member 130 is provided at a position sandwiched between the bolt 120a and the nut 120b. The fixing portion of the rear part 111 is positioned between the cushioning member 130 and the nut 120b. Although the cushioning member 130 is, for example, a rubber mount, any member can be adopted insofar as it is an elastic member.

Since the ECU 100 is fixed to the rear part 111 via the cushioning member 130 in this manner, the vibration from the bracket 11 can be absorbed by the cushioning member 130, and thus the vibration that is applied to the ECU 100 can be suppressed.

In addition, since the ECU 100 is fixed to the rear part 111 by the plurality of protruding portions 100a, the vibration from the bracket 11 can be dispersed to each of the plurality of protruding portions 100a, and thus the vibration that is applied to the ECU 100 can be suppressed.

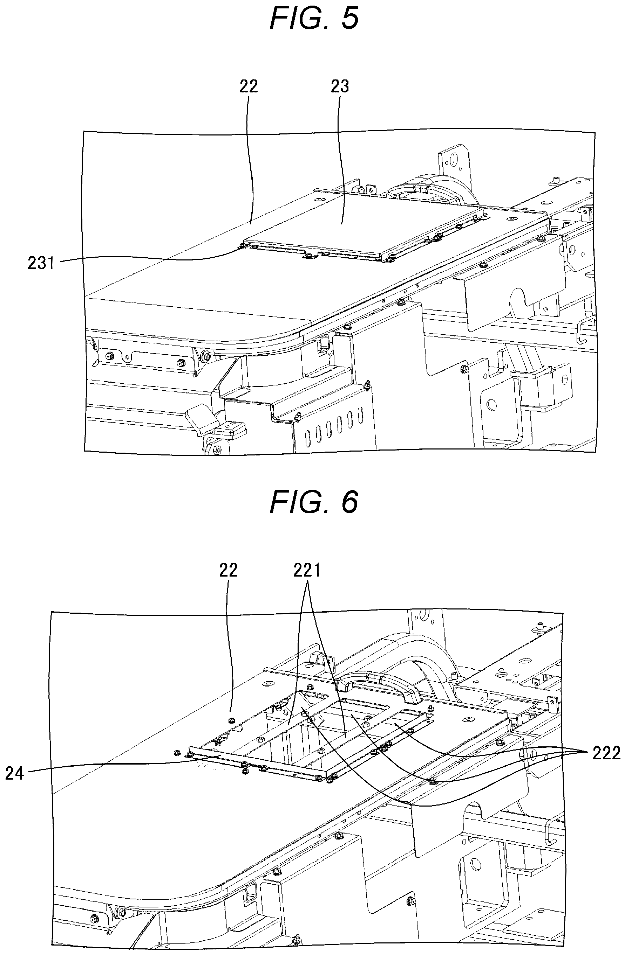

Next, the configuration around the hood 22 will be described with reference to Figs. 5 to 9. Figs. 5 and 6 are enlarged views of the riding lawnmower 1. It should be noted that the hood 22 is illustrated in a transparent state in Figs. 5 and 6 and this is for convenience of description. In addition, a state where the cover 23 is omitted is illustrated in Fig. 6.

As illustrated in Figs. 5 and 6, the cover 23 is disposed above so as to cover an intake port 222 of the hood 22. The intake port 222 is provided above the engine 4 and the exhaust gas purification device 5 and cools the engine 4 and the exhaust gas purification device 5 with intake air.

Specifically, the intake port 222 is divided into a plurality of pieces by a frame portion 221. In Fig. 6, it is divided into three intake ports 222 by two frame portions 221 extending in the front-rear direction of the traveling vehicle body 2. It should be noted that the number of division of the intake port 222 may be four or more or two or less. In addition, the frame portion 221 may extend in the right-left direction without being limited to the case of extending in the front-rear direction of the traveling vehicle body 2.

Further, as illustrated in Fig. 5, the cover 23 has a notch portion 231 in its side surface. Although the notch portion 231 is, for example, a U-shaped notch, the notch portion 231 may have a V shape or the like and any shape can be adopted. In addition, although a case where two notch portions 231 are provided in each side surface is illustrated in Fig. 5, the number of the notch portions 231 may be one or three or more. Further, the shapes and sizes of the notch portions 231 may be identical or different.

In addition, although Fig. 5 illustrates a case where the notch portion 231 is formed, a through hole having any shape may be provided in the side surface of the cover 23 instead of the notch portion 231.

In addition, as illustrated in Fig. 6, the hood 22 has an L-shaped bent member 24 provided at a position corresponding to the notch portion 231. Specifically, the bent member 24 is disposed along the outer circumference (edge) of the intake port 222.

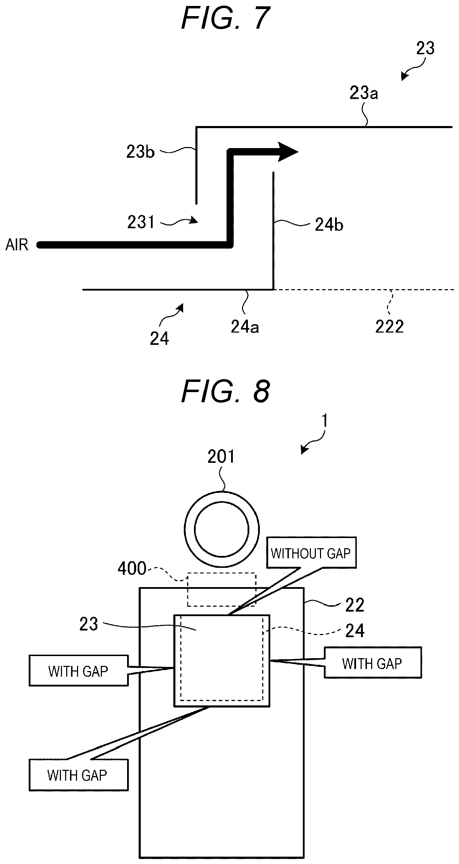

Further, air is supplied to the intake port 222 from the gap that is formed between the notch portion 231 of the cover 23 and the bent member 24. Here, the positional relationship between the cover 23 and the bent member 24 will be described with reference to Fig. 7.

Fig. 7 is a diagram illustrating the positional relationship between the cover 23 and the bent member 24. Fig. 7 is a cross-sectional view of the cover 23 and the bent member 24 from the right-left direction of the traveling vehicle body 2.

As illustrated in Fig. 7, the cover 23 includes a top surface 23a and a side surface 23b. The top surface 23a is provided at a position facing the intake port 222. The side surface 23b is disposed orthogonal to the top surface 23a. It should be noted that the gap-forming notch portion 231 is provided in the side surface 23b of the cover 23. In addition, the bent member 24 includes a bottom surface 24a and a side surface 24b. The bottom surface 24a is disposed along the hood 22. The side surface 24b is disposed orthogonal to the hood 22 and the bottom surface 24a. In addition, the side surface 24b of the bent member 24 is disposed so as to face the side surface 23b of the cover 23. It should be noted that the bottom surface 24a of the bent member 24 is fixed to the hood 22.

As illustrated in Fig. 7, the cover 23 and the bent member 24 are separated from each other. Specifically, the side surface 23b of the cover 23 and the bottom surface 24a of the bent member 24 are separated from each other and the top surface 23a of the cover 23 and the side surface 24b of the bent member 24 are separated from each other. In other words, a gap is formed between the cover 23 and the bent member 24. As a result, air passes from the gap formed in the side surface 23b of the cover 23 while the mown grass that has failed to enter the collector 8 from the transport port 400 (see Fig. 2) is blocked by the top surface 23a of the cover 23. Accordingly, air can be supplied to the intake port 222 and the cooling efficiency of the engine 4 can be enhanced.

In addition, as illustrated in Fig. 7, the end portion of the side surface 24b in the bent member 24 is positioned above the end portion of the side surface 23b of the cover 23. As a result, intrusion into the intake port 222 from the side surface 23b of the cover 23 can be suppressed.

It should be noted that the present embodiment illustrates a case where the hood 22 is provided with the bent member 24 and yet a net-shaped member (net) preventing mown grass intrusion may be disposed in the notch portion 231 of the cover 23 instead of the bent member 24.

Next, the disposition relationship between the cover 23 and the bent member 24 will be described with reference to Fig. 8. The disposition relationship between the cover 23 and the bent member 24 is illustrated in Fig. 8. A top view of the riding lawnmower 1 is schematically illustrated in Fig. 8.

As illustrated in Fig. 8, the transport port 400 is disposed on the front side with respect to the cover 23. In other words, the mown grass is likely to intrude from the front side of the cover 23. Accordingly, no gap is formed in the side surface of the cover 23 that is on the front side as one of the four side surfaces of the cover 23 and gaps are formed in the side surfaces on the left, right, and rear sides. In other words, gaps are formed in the side surfaces of the cover 23 other than the side surface on the transport port 400 side, which is a connection portion side.

Specifically, the side surface of the cover 23 that is on the front side lacks the notch portion 231 and the bent member 24. In other words, the side surface that is closest to the transport port 400 as one of the four side surfaces of the cover 23 is blocked. As a result, it is possible to highly accurately suppress the intrusion of the mown grass that has failed to enter the collector 8 from the transport port 400.

It should be noted that another side surface may be blocked, insofar as a gap can be formed in at least one of the three (left, right, and rear) side surfaces, although only the side surface of the cover 23 on the front side is gapless in Fig. 8.

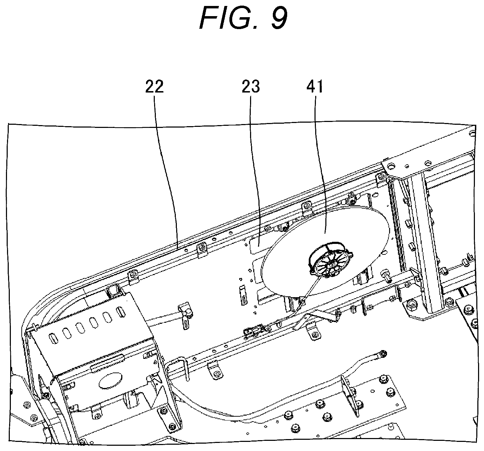

It should be noted that the riding lawnmower 1 may include an electric fan 41 that assists in the intake to the intake port 222. Fig. 9 is a diagram illustrating the disposition of the electric fan 41. Specifically, the electric fan 41 is provided on the main surface of the hood 22 that is on the side opposite to the cover 23 and is disposed so as to cover the intake port 222. As a result, the cooling efficiency of the engine 4 and the exhaust gas purification device 5 can be enhanced.

As described above, the riding lawnmower 1 according to the embodiment includes the traveling vehicle body 2 having the vehicle wheel 32, the mower device 3 provided on the traveling vehicle body 2, the driver's seat 20 provided on the front part of the traveling vehicle body 2, the engine 4 provided in the rear part of the traveling vehicle body 2, the hydraulic pump 13a disposed behind the engine 4 in order to transmit the power of the engine 4 to the vehicle wheel 32, and the control device (ECU 100) disposed behind the hydraulic pump 13a and controlling the engine 4. As a result, it is possible to suppress a rise in the ambient temperature of the ECU 100, which is an engine control device.

In addition, the riding lawnmower 1 further includes the bracket 11 supporting the engine 4 and the vehicle wheel 32. The ECU 100 is fixed to the bracket 11 in a state where its side in the right-left direction is surrounded by the bracket 11. As a result, the hot air from the engine 4 can be blocked by the bracket 11 provided on the side of the ECU 100 in the right-left direction, and thus a rise in the ambient temperature of the ECU 100 can be suppressed.

In addition, the bracket 11 is open in the up-down direction of the ECU 100. As a result, the traveling wind that is not heated by the engine 4 can be taken in, and thus a rise in the ambient temperature of the ECU 100 can be suppressed.

In addition, the ECU 100 has the support member 110 supporting the control circuit. The support member 110 has the plurality of protruding portions 100a fixed to the bracket 11. As a result, even in a case where the vibration of the engine 4 or the vehicle wheel 32 is transmitted through the bracket 11, it is dispersed by the plurality of protruding portions 100a, and thus an excessive vibration application to a specific part of the ECU 100 can be suppressed.

In addition, the plurality of protruding portions 100a are fixed to the bracket 11 via the cushioning member 130. As a result, even in a case where the vibration of the engine 4 or the vehicle wheel 32 is transmitted through the bracket 11, the vibration can be absorbed by the cushioning member 130, and thus the vibration that is applied to the ECU 100 can be suppressed.

In addition, the support member 110 has a plate shape and the main surface 110a is disposed so as to extend in the up-down direction with respect to the traveling vehicle body 2. As a result, the ECU 100 is fixed in an upright state, and thus the periphery of the ECU 100 can be configured with compactness and dust accumulation on the side surface of the ECU 100 in the up-down direction can be suppressed.

As described above, the riding lawnmower 1 according to the embodiment includes the traveling vehicle body 2, the mower device 3 provided on the traveling vehicle body 2, the driver's seat 20 provided on the front part of the traveling vehicle body 2, the engine 4 provided in the rear part of the traveling vehicle body 2, the hood 22 provided above the engine 4 and having the intake port 222, and the cover 23 provided on the hood 22 and covering the intake port 222 from above. The cover 23 is disposed so as to form a gap with the hood 22. As a result, it is possible to enhance the cooling efficiency of the engine while suppressing turf grass intrusion.

In addition, the cover 23 has the top surface 23a facing the intake port 222 and the side surface 23b orthogonal to the top surface 23a. Further, the side surface 23b is provided with the gap-forming notch portion 231. As a result, air can be taken into the intake port 222 from the notch portion 231, and thus there is no need to provide a new member and an increase in cost can be suppressed.

In addition, the riding lawnmower 1 further includes the bent member 24 that is along the outer circumference of the intake port 222 and has the side surface 24b orthogonal to the hood 22. The side surface 23b of the cover 23 is disposed so as to face the side surface 24b of the bent member 24 with a gap formed. As a result, it is possible to supply air from the gap to the intake port 222 while preventing mown grass intrusion into the intake port 222 by means of the side surface 24b of the bent member 24.

In addition, the riding lawnmower 1 further includes the collector 8 provided above the hood 22 and collecting the turf grass cut by the mower device 3. As for the collector 8, the connection portion (transport port 400) in relation to the mower device 3 is provided in front of the cover 23. Further, a gap is formed in the side surface of the cover 23 other than the side surface on the connection portion side. As a result, it is possible to suppress the intrusion of the mown grass that has failed to enter the collector 8 from the connection portion from the side surface of the cover 23 on the front side.

Further effects and modification examples can be easily derived by those skilled in the art. Accordingly, the broader aspects of the invention are not limited to the particular details and representative embodiment expressed and described as above.

## Claims

1. A work vehicle (1) comprising:
a traveling vehicle body (2);
a mower device (3) provided on the traveling vehicle body (2);
a driver's seat (20) provided on the front part of the traveling vehicle body (20);
an engine (4) provided in the rear part of the traveling vehicle body (2);
a hood (22) provided above the engine (4); and
a collector (8) provided above the hood (22) and collecting turf grass ) cut by the mower device (3),
wherein the collector (8) is provided with a connection portion (400) in relation to the mower device (3) provided in front of a cover (23),
**characterized in that**
the hood (22) has an intake port (222),
the work vehicle (1) further comprises the cover (23) provided on the hood (22) and covering the intake port (222) from above,
the cover (23) is disposed so as to form a gap with the hood (22), and
the gap is formed in a side surface of the cover (23) other than a side surface on the side of the connection portion (400).

2. The work vehicle (1) according to claim 1, wherein
the cover (23) has a top surface (23a) facing the intake port (222) and a side surface (23a) orthogonal to the top surface (23a), and
the side surface (23a) is provided with a notch portion (231) forming the gap.

3. The work vehicle (1) according to claim 2, further comprising a bent member (24) along an outer circumference of the intake port (222) and having a side surface (24b) orthogonal to the hood (22),
wherein the side surface (23a) of the cover (23) is disposed so as to face the side surface (24b) of the bent member (24) with the gap formed.

## Patentansprüche

1. Arbeitsfahrzeug (1), das Folgendes umfasst:
einen Fahrzeugfahrkörper (2);
eine Mähvorrichtung (3), die auf dem Fahrzeugfahrkörper (2) vorgesehen ist;
einen Fahrersitz (20), der auf dem vorderen Teil des Fahrzeugfahrkörpers (20) vorgesehen ist;
einen Motor (4), der im hinteren Teil des Fahrzeugfahrkörpers (2) vorgesehen ist;
eine Haube (22), die oberhalb des Motors (4) vorgesehen ist; und
einen Sammler (8), der oberhalb der Haube (22) vorgesehen ist und Rasengras sammelt, das von der Mähvorrichtung (3) geschnitten wird,
wobei der Sammler (8) mit einem Verbindungsabschnitt (400) in Beziehung zu der Mähvorrichtung (3) versehen ist, der vor einer Abdeckung (23) vorgesehen ist,
**dadurch gekennzeichnet, dass**
die Haube (22) eine Ansaugöffnung (222) hat,
das Arbeitsfahrzeug (1) außerdem die Abdeckung (23) umfasst, die auf der Haube (22) vorgesehen ist und die Ansaugöffnung (222) von oben abdeckt,
die Abdeckung (23) so ausgebildet ist, dass sie mit der Haube (22) einen Spalt ausbildet, und
der Spalt in einer anderen Seitenfläche der Abdeckung (23) als einer Seitenfläche auf der Seite des Verbindungsabschnitts (400) ausgebildet ist.

2. Arbeitsfahrzeug (1) nach Anspruch 1, wobei
die Abdeckung (23) eine der Ansaugöffnung (222) zugewandte obere Fläche (23a) und eine zur oberen Fläche (23a) senkrechte Seitenfläche (23a) hat und
die Seitenfläche (23a) mit einem Kerbenabschnitt (231) versehen ist, der den Spalt ausbildet.

3. Arbeitsfahrzeug (1) nach Anspruch 2, das außerdem ein gebogenes Element (24) entlang eines Außenumfangs der Ansaugöffnung (222) und mit einer zur Haube (22) senkrechten Seitenfläche (24b) umfasst,
wobei die Seitenfläche (23a) der Abdeckung (23) so angeordnet ist, dass sie der Seitenfläche (24b) des gebogenen Elements (24) mit dem ausgebildeten Spalt zugewandt ist.

## Revendications

1. Engin de travail (1) comprenant :
un corps d'engin en déplacement (2) ;
un dispositif de tonte (3) fourni sur le corps d'engin en déplacement (2) ;
un siège de conducteur (20) fourni sur la partie avant du corps d'engin en déplacement (20) ;
un moteur (4) fourni dans la partie arrière du corps d'engin en déplacement (2) ;
un capot (22) fourni au-dessus du moteur (4) ; et
un collecteur (8) fourni au-dessus du capot (22) et collectant du gazon coupé par le dispositif de tonte (3),
dans lequel le collecteur (8) est fourni avec une partie de liaison (400) en liaison avec le dispositif de tonte (3) fournie devant un cache (23),
**caractérisé en ce que**
le capot (22) a un orifice d'entrée (222),
l'engin de travail (1) comprend en outre le cache (23) fourni sur le capot (22) et couvrant l'orifice d'entrée (222) depuis le dessus,
le cache (23) est disposé de manière à former un espacement avec le capot (22), et
l'espacement est formé dans une surface latérale du cache (23) autre qu'une surface latérale sur le côté de la partie de liaison (400).

2. Engin de travail (1) selon la revendication 1, dans lequel
le cache (23) a une surface supérieure (23a) faisant face à l'orifice d'entrée (222) et une surface latérale (23a) orthogonale à la surface supérieure (23a), et
la surface latérale (23a) est pourvue d'une partie en encoche (231) formant l'espacement.

3. Engin de travail (1) selon la revendication 2, comprenant en outre un élément plié (24) le long d'une circonférence extérieure de l'orifice d'entrée (222) et ayant une surface latérale (24b) orthogonale au capot (22),
dans lequel la surface latérale (23a) du cache (23) est disposée de manière à faire face à la surface latérale (24b) de l'élément plié (24) avec l'espace formé.
